# EUROPEAN PATENT SPECIFICATION

(11) **EP 3 027 423 B1**
(45) Date of publication and mention of the grant of the patent: **08.04.2020**
(21) Application number: 14777806.2
(22) Date of filing: 29.07.2014
(51) Int. Cl.: B60C 1/00, C08J 3/20, C08K 5/20, C08K 5/21

(54) **RUBBER TYRE COMPOUND PRODUCTION METHOD**
VERFAHREN ZUR HERSTELLUNG EINES KAUTSCHUKREIFENVERBUNDES
PROCÉDÉ DE PRODUCTION D'UN COMPOSÉ DE PNEU EN CAOUTCHOUC

(30) Priority: 29.07.2013 IT RM20130442
(43) Date of publication of application: 08.06.2016
(73) Proprietor: Bridgestone Corporation, Tokyo 104-8340 (JP)
(72) Inventor: GRENCI, Valeria, I-00124 Roma (IT); AGORETTI, Pasquale, I-00040 Ariccia (IT)
(74) Representative: Marchetti, Alessio
(86) International application number: PCT/IB2014/063521
(87) International publication number: WO 2015/015421

(56) References cited:
- WO-A1-03/091324
- WO-A1-2012/164002
- US-A- 5 674 932

## Description

### TECHNICAL FIELD

The present invention relates to a rubber tyre compound production method.

### BACKGROUND ART

One goal on which research in the tyre industry is constantly focused is in improving tyre rolling and abrasion resistance.

In this regard, silica has long been used as a reinforcing filler in tread compounds. Silica is used instead of carbon black and together with special chemical substances (silanes) which interact with the silanol groups of silica to prevent its particles from forming hydrogen bonds. With the right functionality, silanes may also interact with the polymer base to form a chemical bridge between it and the silica and so improve affinity of the polymer with the reinforcing filler. Silica is employed for the advantages it affords in terms of rolling resistance and wet-road-holding performance.

As anyone skilled in the art knows, the better the silica interacts with the polymer base, the better the resulting compound is in terms of rolling and abrasion resistance. WO 03/091324 A1 discloses a tire comprising structural tread band including crosslinked elastomeric material obtained by crosslinking an elastomeric composition containing diene elastomer polymers, reinforcing fillers, zinc oxide , fatty acid amide, and zinc salt of carboxylic acid.

The Applicant has surprisingly discovered a rubber compound production method, in which silica as a reinforcing filler interacts better with the polymer base.

### DISCLOSURE OF INVENTION

The object of the present invention is a rubber tyre compound production method, characterized by comprising a mixing step, in which at least one cross-linking, unsaturated-chain polymer base, silica, a silane bonding agent, and 0.6 to less than 5 phr of a chemical of general formula (I) are mixed with one another; and a following mixing step, in which at least stearic acid and a curing system are added to and mixed with the compound being prepared; 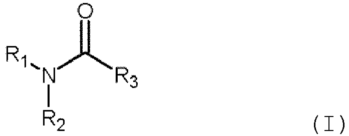 wherein:
R₁, R₂ and R₃, which are the same or different, are chosen from the group consisting of: hydrogen and groups in the alkane, alkene, cycloalkane, heterocyclic compound, aromatic compound, amine, imine, amide, sulphide, alcohol, aldehyde, ketone, ether, ester, nitrile, nitro-derivative, and isocyanate families.

Tests show that using over 5 phr of the chemical of general formula (I) may cause premature curing problems when extruding the compound. Other potential problems resulting from using over 5 phr of the chemical of general formula (I) include increased viscosity of the compound being produced; and reduced adhesion of the rubber to the metal cords, due to the chemical of general formula (I) migrating in compounds incorporating metal cords.

To safely eliminate one of the above drawbacks, less than 5 phr of the chemical of general formula (I) should be preferably used.

Preferably, R₁, R₂ and R₃, which are the same or different, are chosen from the group consisting of: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃)₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃)₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC (CH₃)₂X, NHC₅H₉X, NHC₅H₉NC₅H₉X, NH₂CH₂C₇H₁₂X, OHC₆H₁₀X, NHCH₂C₆H₃C₃H₂X, wherein X may be O or S.

Preferably, R₁ and R₂ are H, and R₃ is NH₂.

Preferably, 20 phr or more of silica is used in the first mixing step.

Preferably, the polymer base is chosen from the group comprising styrene-butadiene rubber, butadiene rubber, natural rubber, or mixtures thereof.

Preferably, 1 to 6 phr of stearic acid is used in the final mixing step.

A further object of the present invention is a tread compound produced using the method according to the present invention.

A further object of the present invention is a tread made from the compound produced using the method according to the present invention.

A further object of the present invention is a tyre, at least one part of which is made from the compound produced using the method according to the present invention.

### BEST MODE FOR CARRYING OUT THE INVENTION

The following are non-limiting examples for a clearer understanding of the present invention.

Two compounds (E1, E2) were produced using the method according to the present invention.

At the first mixing step, the polymer base is mixed with silica, the silane bonding agent, and a chemical of general formula (I). More specifically, the chemical used in example compounds E1, E2 was urea. Stearic acid and the curing system were added at the final mixing step. The compounds produced using the method according to the present invention differ from each other as regards the amount of urea added at the first mixing step, and the type of polymer base.

To correctly evaluate the advantages of the present invention, five control compounds (Ctrl 1 - Ctrl 5) were produced. The first two control compounds (Ctrl 1, Ctrl 2) differ from the compounds produced according to the invention by containing no urea, and differ from each other as to the step in which the stearic acid is added: in the first control compound (Ctrl 1), stearic acid is added at the first mixing step, as in a standard method; whereas, in the second control compound (Ctrl 2), it is added at the final step, together with the curing system.

Control compounds Ctrl 3 and Ctrl 4 differ from the compounds produced according to the invention by the stearic acid being added at the first mixing step according to the standard method.

Control compound Ctrl 5 differs from compound E1 produced according to the invention by simply substituting thiourea for the chemical of general formula (I).

The example compounds were produced as follows:

### - compound preparation -

### (first mixing step)

Prior to mixing, a 230-270-litre, tangential-rotor mixer was loaded with the ingredients in Tables I and II to a fill factor of 66-72%.

The mixer was operated at a speed of 40-60 rpm, and the resulting mixture unloaded on reaching a temperature of 140-160°C.

### (second mixing step)

The resulting mixture was mixed again in the mixer operated at a speed of 40-60 rpm, and the compound unloaded on reaching a temperature of 130-150°C.

### (final mixing step)

The ingredients in Tables I and II were added to the mixture from the first mixing step to a fill factor of 63-67%.

The mixer was operated at a speed of 20-40 rpm, and the resulting mixture unloaded on reaching a temperature of 100-110°C.

Table I shows the compositions in phr of the two compounds produced in accordance with the teachings of the present invention.

**TABLE I**

| | E1 | E2 |
|---|---|---|
| First mixing step | | |
| S-SBR | 80.0 | 80.0 |
| BR | 20.0 | 20.0 |
| Carbon Black | 8.0 | 8,0 |
| Silica | 80.0 | 80.0 |
| Silane bonding agent | 8.0 | 8.0 |
| Urea | 1.0 | 3.0 |

| Final mixing step | | |
|---|---|---|
| Stearic acid | 2.0 | 2.0 |
| Sulphur | 1.5 | 1.5 |
| Accelerant 1 | 1.0 | 1.0 |
| Accelerant 2 | 1.0 | 1.0 |
| Antioxidant | 2.0 | 2.0 |
| ZnO | 1.0 | 1.0 |

Table II shows the compositions in phr of the five control compounds.

**TABLE II**

| | Ctrl.1 | Ctrl.2 | Ctrl.3 | Ctrl.4 | Ctrl.5 |
|---|---|---|---|---|---|
| First mixing step | | | | | |
| S-SBR | 80.0 | 80.0 | 80.0 | 80.0 | 80.0 |
| BR | 20.0 | 20.0 | 20.0 | 20.0 | 20.0 |
| Carbon Black | 8.0 | 8.0 | 8.0 | 8.0 | 8.0 |
| Silica | 80.0 | 80.0 | 80.0 | 80.0 | 80.0 |
| Silane bonding agent | 8.0 | 8.0 | 8.0 | 8.0 | 8.0 |
| Urea | -- | -- | 1.0 | 3.0 | -- |
| Thiourea | -- | -- | -- | -- | 1.0 |
| Stearic acid | 2.0 | -- | 2.0 | 2.0 | -- |

| Final mixing step | | | | | |
|---|---|---|---|---|---|
| Stearic acid | -- | 2.0 | -- | -- | 2.0 |
| Sulphur | 1.5 | 1.5 | 1.5 | 1.5 | 1.5 |
| Accelerant 1 | 1.0 | 1.0 | 1.0 | 1.0 | 1.0 |
| Accelerant 2 | 1.0 | 1.0 | 1.0 | 1.0 | 1.0 |
| Antioxidant | 2.0 | 2.0 | 2.0 | 2.0 | 2.0 |
| ZnO | 1.0 | 1.0 | 1.0 | 1.0 | 1.0 |

S-SBR is a polymer base produced by solution polymerization, with a mean molecular weight of 800-1500x10³ and 500-900x10³ respectively, a 10 to 45% styrene content, and a 20 to 70% vinyl content.

BR is a butadiene rubber.

The silica used is marketed by EVONIK under the trade name Ultrasil VN3 GR, and has a surface area of roughly 170 m²/g.

The silane bonding agent used is in the polysulphide organosilane class, is of formula (CH₃CH₂O)₃Si(CH₂)₃SS(CH₂)₃Si(OCH₂CH₃)₃ and is marketed by EVONIK under the trade name SI75.

The Accelerant 1 used is mercaptobenzothiazol-disulphide (MBTS).

The Accelerant 2 used is diphenyl-guanidine (DPG) .

The antioxidant used is a mixture of polymerized 1,2-di-hydro-2,2,4-trimethylquinoline (TMQ) and N-1,3-dimethylbutyl-N'-phenyl-paraphenylenediamine (6PPD).

The compounds in Tables I and II were tested to determine their properties related to effective chemical bonding of the silica and the polymer base.

Dynamic properties were measured as per ISO Standard 4664 (as anyone skilled in the art knows, 60°C tanδ values are closely related to rolling resistance properties: the lower the 60°C tanδ value, the better the rolling resistance); and abrasion resistance was measured as per ISO Standard 4649. The parameter indicated 'BOUND RUBBER' is commonly used in literature to indicate the chemical-physical interaction of the polymer and filler. The test is carried out on green samples, and normally determines the fraction of the compound not solubilised after treatment in THF (24 hours at ambient temperature).

Tables III and IV show the above test results for the compounds produced using the method according to the present invention and for the control compounds respectively. To show more clearly the advantages of the compounds according to the present invention, the test results are indexed on the basis of the results of control compound Ctrl 1 representing the standard methodology.

**TABLE III**

| | E1 | E2 |
|---|---|---|
| Rolling resistance | 110 | 120 |
| Bound rubber | 115 | 125 |
| Abrasion resistance | 120 | 140 |

**TABLE IV**

| | Ctrl.1 | Ctrl.2 | Ctrl.3 | Ctrl.4 | Ctrl.5 |
|---|---|---|---|---|---|
| Rolling resistance | 100 | 100 | 102 | 104 | 105 |
| Bound rubber | 100 | 102 | 105 | 108 | 110 |
| Abrasion resistance | 100 | 100 | 105 | 107 | 110 |

As shown clearly in Tables III and IV, the compounds produced using the method according to the present invention have better rolling resistance, better interaction between the silica and the polymer base, and better abrasion resistance.

More specifically, as shown by the control compound Ctrl 2, Ctrl 3 and Ctrl 4 figures, simply shifting the stearic acid to the final mixing step or simply using a chemical of general formula (I) is not enough to achieve the advantages achieved by the compounds according to the present invention.

Moreover, as shown by the control compound Ctrl 5 figures, other chemicals of other than general formula (I), even though structurally similar, are not as effective in terms of silica and polymer base interaction.

## Claims

1. A rubber tyre compound production method, **characterized by** comprising a mixing step, in which at least one cross-linking, unsaturated-chain polymer base, silica, a silane bonding agent, and 0.6 to less than 5 phr of a chemical of general formula (I) are mixed with one another; and a following mixing step, in which at least stearic acid and a curing system are added to and mixed with the compound being prepared; 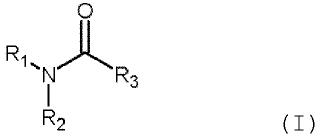 wherein:
R₁, R₂ and R₃, which are the same or different, are chosen from the group consisting of: hydrogen and groups in the alkane, alkene, cycloalkane, heterocyclic compound, aromatic compound, amine, imine, amide, sulphide, alcohol, aldehyde, ketone, ether, ester, nitrile, nitro-derivative, and isocyanate families.

2. A rubber tyre compound production method as claimed in Claim 1, **characterized in that** R₁, R₂ and R₃, which are the same or different, are chosen from the group consisting of: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C (CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃)₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃)₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC (CH₃)₂X, NHC₅H₉X, NHC₅H₉NC₅H₉X, NH₂CH₂C₇H₁₂X, OHC₆H₁₀X, NHCH₂C₆H₃C₃H₂X, wherein X may be O or S.

3. A rubber tyre compound production method as claimed in Claim 2, **characterized in that** R₁ and R₂ are H, and R₃ is NH₂.

4. A rubber tyre compound production method as claimed in one of the foregoing Claims, **characterized in that** 20 phr or more of silica is used in the first mixing step.

5. A rubber tyre compound production method as claimed in one of the foregoing Claims, **characterized in that** the polymer base is chosen from the group comprising styrene-butadiene rubber, butadiene rubber, natural rubber, or mixtures thereof.

6. A rubber tyre compound production method as claimed in one of the foregoing Claims, **characterized in that** 1 to 6 phr of stearic acid is used in the final mixing step.

7. A tyre portion compound produced using the method as claimed in one of the foregoing Claims.

8. A tread made from the compound as claimed in Claim 7.

9. A tyre, at least one part of which is made from the compound as claimed in Claim 7.

## Patentansprüche

1. Verfahren zur Herstellung eines Kautschukreifenverbundes, **dadurch gekennzeichnet, dass** es einen Mischungsschritt, in dem mindestens eine vernetzende, ungesättigte Polymerkettenbasis, Kieselerde, ein Silanhaftmittel und 0,6 bis weniger als 5 phr einer Chemikalie der allgemeinen Formel (I) miteinander vermischt werden; und einen folgenden Mischungsschritt umfasst, in dem mindestens Stearinsäure und ein Vulkanisierungssystem hinzufügt und mit dem erzeugten Verbund vermischt werden; 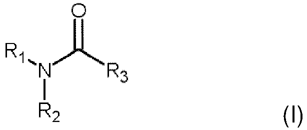 worin:
R₁, R₂ und R₃, die gleich oder verschieden sind, ausgewählt sind aus der Gruppe bestehend aus: Wasserstoff und Gruppen in den Familien Alkan, Alken, Cycloalkan, heterocyclische Verbindung, aromatische Mischung, Amin, Imin, Amid, Sulfid, Alkohol, Aldehyd, Keton, Ether, Ester, Nitril, Nitroderivat und Isocyanat.

2. Verfahren zur Herstellung eines Kautschukreifenverbundes nach Anspruch 1, **dadurch gekennzeichnet, dass** R₁, R₂ und R₃, die gleich oder verschieden sind, ausgewählt sind aus der Gruppe bestehend aus: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃)₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃)₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC(CH₃)₂X, NHC₅H₉X, NHC₅H₉NC₅H₉X, NH₂CH₂C₇H₁₂X, OHC₆H₁₀X, NHCH₂C₆H₃C₃H₂X, worin X O oder S sein kann.

3. Verfahren zur Herstellung eines Kautschukreifenverbundes nach Anspruch 2, **dadurch gekennzeichnet, dass** R₁ und R₂ H sind und R₃ NH₂ ist.

4. Verfahren zur Herstellung eines Kautschukreifenverbundes nach einem der vorstehenden Ansprüche, **dadurch gekennzeichnet, dass** im ersten Mischungsschritt 20 phr oder mehr Kieselerde verwendet wird.

5. Verfahren zur Herstellung eines Kautschukreifenverbundes nach einem der vorstehenden Ansprüche, **dadurch gekennzeichnet, dass** die Polymerbasis ausgewählt ist aus der Gruppe bestehend aus Styrol-Butadien-Kautschuk, Butadien-Kautschuk, Naturkautschuk oder Mischungen davon.

6. Verfahren zur Herstellung eines Kautschukreifenverbundes nach einem der vorstehenden Ansprüche, **dadurch gekennzeichnet, dass** 1 bis 6 phr Stearinsäure im finalen Mischungsschritt verwendet wird.

7. Reifenabschnittverbund, hergestellt unter Verwendung des Verfahrens nach einem der vorstehenden Ansprüche.

8. Lauffläche, gefertigt aus einem Verbund nach Anspruch 7.

9. Reifen, von welchem mindestens ein Teil aus dem Verbund nach Anspruch 7 gefertigt ist.

## Revendications

1. Procédé de production d'un composé pour pneumatique en caoutchouc, **caractérisé en ce qu'**il comprend une étape de mélange, dans laquelle on mélange au moins une base polymère à chaîne insaturée, de réticulation, de la silice, un agent liant de silane, et de 0,6 à moins de 5 phr d'un composé chimique de formule générale (I) les uns avec les autres ; et une étape de mélange suivante, dans laquelle on ajoute au moins de l'acide stéarique et un système de durcissement et on les mélange au composé préparé ; 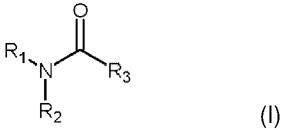 dans lequel :
R₁, R₂ et R₃, qui sont identiques ou différents, sont choisis dans le groupe constitué de : hydrogène et des groupes des familles alcane, alcène, cycloalcane, composé hétérocyclique, composé aromatique, amine, imine, amide, sulfure, alcool, aldéhyde, cétone, éther, ester, nitrile, dérivé nitro, et isocyanate.

2. Procédé de production d'un composé pour pneumatique en caoutchouc selon la revendication 1, **caractérisé en ce que** R₁, R₂ et R₃, qui sont identiques ou différents, sont choisis dans le groupe constitué de : H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃)₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃)₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC(CH₃)₂X, NHC₅H₉X, NHC₅H₉NC₅H₉X, NH₂CH₂C₇H₁₂X, OHC₆H₁₀X, NHCH₂C₆H₃C₃H₂X, dans lequel X peut être O ou S.

3. Procédé de production d'un composé pour pneumatique en caoutchouc selon la revendication 2, **caractérisé en ce que** R₁ et R₂ sont H, et R₃ est NH₂.

4. Procédé de production d'un composé pour pneumatique en caoutchouc selon l'une des revendications précédentes, **caractérisé en ce que l**'on utilise 20 phr ou plus de silice dans la première étape de mélange.

5. Procédé de production d'un composé pour pneumatique en caoutchouc selon l'une des revendications précédentes, **caractérisé en ce que** la base polymère est choisie dans le groupe comprenant le caoutchouc styrène-butadiène, le caoutchouc butadiène, le caoutchouc naturel, ou leurs mélanges.

6. Procédé de production d'un composé pour pneumatique en caoutchouc selon l'une des revendications précédentes, **caractérisé en ce que** l'on utilise de 1 à 6 phr d'acide stéarique dans l'étape de mélange finale.

7. Composé pour partie de pneumatique produit en utilisant le procédé selon l'une des revendications précédentes.

8. Bande de roulement fabriquée à partir du composé selon la revendication 7.

9. Pneumatique, dont au moins une partie est fabriquée à partir du composé selon la revendication 7.
